(19) **Europäisches Patentamt European Patent Office Office européen des brevets**

(11) **EP 2 521 024 A1**

(12) **EUROPÄISCHE PATENTANMELDUNG**

(43) Veröffentlichungstag:
  **07.11.2012 Patentblatt 2012/45**

(51) Int Cl.:
  ***G06F 7/72*** *(2006.01)*

(21) Anmeldenummer: **12003024.2**

(22) Anmeldetag: **30.04.2012**

(84) Benannte Vertragsstaaten:
  **AL AT BE BG CH CY CZ DE DK EE ES FI FR GB GR HR HU IE IS IT LI LT LU LV MC MK MT NL NO PL PT RO RS SE SI SK SM TR**
  Benannte Erstreckungsstaaten:
  **BA ME**

(30) Priorität: **04.05.2011 DE 102011100390**

(71) Anmelder: **Giesecke & Devrient GmbH 81677 München (DE)**

(72) Erfinder: **Seysen, Dr. Martin, 80809 München (DE)**

(54) **Beschleunigte kryptographische Berechnung, insbesondere ECC-Berechnung, in Prozessor mit Montgomery-Koprozessor**

(57) Die Erfindung schafft ein Verfahren zum beschleunigten Durchführen einer kryptographischen Berechnung, insbesondere ECC-Berechnung, in einem Prozessor mit einem Hauptprozessor (CPU) und einem dem Hauptprozessor (CPU) zugeordneten Montgomery-Koprozessor. Die Berechnung wird beschleunigt durchgeführt, indem beim Durchführen der Berechnung zumindest eine modulare Addition durch eine einfache Addition ersetzt wird und/ oder zumindest eine modulare Subtraktion durch eine einfache Subtraktion ersetzt wird.

Fig. 1

**EP 2 521 024 A1**

**Beschreibung**

Die Erfindung betrifft ein Verfahren zum beschleunigten Durchführen einer kryptographischen Berechnung in einem Prozessor mit einem Hauptprozessor - CPU - und einem dem Hauptprozessor zugeordneten Montgomery-Koprozessor (Koprozessor, der zur Ausführung der Montgomery-Multiplikation eingerichtet ist), wobei die Berechnung definiert ist durch eine vorbestimmte Folge von Operationen, die Folge umfassend zumindest eine modulare Addition und/oder modulare Subtraktion, und zumindest eine nach der modularen Addition und/oder modularen Subtraktion durchzuführende Montgomery-Multiplikation. Insbesondere betrifft die Erfindung ein Verfahren für eine kryptographische Berechnung auf einer elliptischen Kurve (ECC-Berechnung; ECC = Elliptic Curve Cryptography). Die Erfindung eignet sich insbesondere für Chipkarten mit einem solchen Prozessor.

Die z.B. in P. Montgomery, Modular multiplication without trial division, Mathematics of Computation, 48, 519-521, 1985 ("P. Montgomery" [2]), oder auch in A .J. Menezes, P.C. van Oorschot, S.C. Vanstone, Handbook of Applied Cryptography, Kapitel 14.3.2, S. 600-601 (im Folgenden "Menezes" [3]) beschriebene Montgomery-Multiplikation stellt ein Verfahren zur effizienten Berechnung des Ergebnisses C einer modularen Multiplikation

$$C = A \cdot B \ (\mathrm{mod} \ M)$$

dar. (Bemerkung: Die Montgomery-Multiplikation ist nicht zu verwechseln mit der Montgomery-Punktmultiplikation oder der Montgomery-Leiter).

Der Grundgedanke der Montgomery-Multiplikation besteht darin, zunächst eine Transformation der Eingangswerte der modularen Multiplikation durchzuführen, anschließend eine modifizierte Berechnung durchzuführen, die schneller als eine modulare Multiplikation ist, und schließlich das Berechnungsergebnis zurückzutransformieren, um das Endergebnis zu erzielen. Werden in einer Folge mehrere modulare Operationen durchgeführt, braucht die Transformation der Eingangswerte nur ein einziges Mal am Beginn der Folge und die Rücktransformation der Ausgangswerte nur ein einziges Mal am Ende der Folge durchgeführt zu werden. Hierdurch ist die Montgomery-Multiplikation insbesondere für lange Folgen von Operationen vorteilhaft, wie z. B. die Punktmultiplikation auf einer elliptischen Kurve. Wenn mehrere modulare Additionen, Subtraktionen und Multiplikationen hintereinander auszuführen sind, werden also die Eingangsdaten transformiert, die modularen Operationen mit den transformierten Werten durchgeführt (wobei modulare Multiplikationen durch Montgomery-Multiplikationen zu ersetzen sind), und die Endergebnisse zurück transformiert.

Im obigen Beispiel der modularen Multiplikation C = A.B (mod M) werden zu den Eingangswerten A und B der Operation zunächst die Montgomery-transformierten Werte A' = A.R (mod M), B' = B.R (mod M) berechnet. Mit Hilfe des Koprozessors wird $A' \cdot B' \cdot R^{-1}$ (mod M) berechnet. Modulo M ist dieser Wert aber gerade $A' \cdot B'' \cdot R^{-1} = A.B.R = C \cdot R$, also der Montgomerytransformierte Wert des Produktes C.

Einige Chipkartenprozessoren enthalten neben einem Hauptprozessor CPU einen speziellen Montgomery Koprozessor, der zur Beschleunigung der Montgomery-Multiplikation eingerichtet ist. Auf Grund seiner Implementierungsweise kann der Koprozessor Montgomery Multiplikationen wesentlich schneller berechnen als der Hauptprozessor CPU. Typischerweise kann der Montgomery-Koprozessor für verschiedene Bitlängen der Eingangsdaten A und B konfiguriert werden. Je nach Ausführung kann der Koprozessor negative Eingangsdaten zulassen oder nicht. Der Einfachheit halber nehmen wir an, dass A und B die Bedingung $k_{min} < A, B < k_{max}$ erfüllen müssen. Der Montgomery-Koprozessor berechnet dann den Wert $C = A \cdot B \cdot R^{-1}$ (mod M), wobei R eine durch den Koprozessor vorgegebene Zweierpotenz mit $R \geq \max( \mid, k_{min} \mid, \mid k_{max} \mid )$ ist. Die genauen Werte von R, $k_{min}$ und $k_{max}$ hängen von den Eigenschaften und der (sonstigen) Konfiguration des verwendeten Koprozessors ab. Vor Beginn einer kryptographischen Berechnung mit einem Modulus M, durchzuführen mit dem Koprozessor, wird der Koprozessor mit geeigneten Werten von R, $k_{min}$ und $k_{max}$ konfiguriert.

Beispiele für Montgomery Koprozessoren (Koprozessoren, die zur Ausführung der Montgomery-Multiplikation eingerichtet sind) sind aus DE 10357661 B4 und US 5,961,578 A bekannt.

Verfahren und Methoden für die Implementierung von ECC-Operationen (ECC = Elliptic Curve Cryptography), d.h. für kryptographische Operationen auf elliptischen Kurven, sind aus D. Hankerson, A. Menezes, S. Vanstone. Guide to Elliptic Curve cryptography. Springer Verlag, 2004 (im Folgenden "ECC Guide" [1]) bekannt.

Die Montgomery-Multiplikation kann vorteilhaft eingesetzt werden bei längeren Operationen (wie z.B. der Punktmultiplikation) auf elliptischen Kurven mit Primzahlcharakteristik. Generell wird die Punktmultiplikation als eine Folge von einfacheren Punktoperationen Punktadditionen und Punktverdoppelungen durchgeführt. Verfahren zur Reduktion der Punktmultiplikation auf die genannten einfacheren Operationen Punktaddition und Punktverdoppelung sind aus dem o.g. ECC Guide [1] bekannt.

Gegenstand der Erfindung ist insbesondere die Beschleunigung der genannten einfachen Operationen Punktaddition und Punktverdoppelung mit Hilfe eines Montgomery-Koprozessors.

Elliptische Kurven in Primzahlcharakteristik p werden in der Regel in Weierstraß-Form dargestellt:

$$y^2 = x^3 + a\,x + b \quad (\mathrm{mod}\ p). \qquad\qquad (1)$$

Hierbei sind a und b Parameter der elliptischen Kurve. Ein Punkt P auf der Kurve (in affiner Darstellung) ist ein Zahlenpaar P = (x,y), welches die Gleichung (1) erfüllt. Die Formeln für die Verdopplung eines Punktes und für die Addition von zwei Punkten in affinen Koordinaten sind aus dem ECC Guide bekannt. Diese Formeln enthalten modulare Additionen, modulare Subtraktionen, modulare Multiplikationen und modulare Inversionen.

Da die modulare Inversion extrem rechenaufwändig ist, stellt man während einer längeren Rechung die Punkte auf der Kurve besser in projektiven Koordinaten oder projektiven Jacobi-Koordinaten dar. (s. ECC-Guide [1], Kap. 3.2.3). Die Formeln für die Punktaddition oder Punktverdopplung in projektiven oder Jacobi-projektiven Koordinaten sind zwar komplizierter als diejenigen in affinen Koordinaten; aber sie enthalten nur modulare Additionen, modulare Subtraktionen und modulare Multiplikationen. Da in projektiven oder Jacobi-projektive Koordinaten keine modularen Inversionen erforderlich sind, laufen die genannten Punkt-Operationen insbesondere in projektiven Jacobi-Koordinaten deutlich schneller ab als in affinen Koordinaten. Es gibt auch Verfahren für die Punktaddition, bei denen ein Summand affin und der andere projektiv oder Jacobi-projektiv dargestellt wird. Zusammenfassend kann man sagen dass es vorteilhaft ist, Punktoperationen auf elliptischen Kurven zu verwenden, bei denen nur modulare Additionen, Subtraktionen und Multiplikationen, aber keine modularen Inversionen erforderlich sind. Somit ist es vorteilhaft, die elliptische Kurve dargestellt in projektiven oder Jacobi-projektiven Koordinaten zu verwenden.

Bei der Punktmultiplikation kann es vorteilhaft sein, den zu multiplizierenden Punkt und evtl. auch einige im Voraus berechnete kleine ganzzahlige Vielfache dieses Punktes in affiner Form abzuspeichern. Dann kann man bei der Punkt-Addition einen der beiden zu addierenden Punkte affin statt projektiv (oder Jacobi-projektiv) darstellen. Dies führt zu einer einfacheren Formel für die Punktaddition und spart damit Rechenzeit. Näheres hierzu s. ECC Guide [1], Kap. 3.2.2.

Für eine längere Folge von derartigen Punktoperationen (wie sie z.B. bei einer Punktmultiplikation erforderlich ist), werden die Koordinaten der Eingangswerte vorzugsweise einer Montgomery-Transformation unterzogen. Anschließend werden die modularen Operationen für die Punktoperationen mit den transformierten Koordinaten durchgeführt werden. Das Endergebnis erhält man, in dem man die transformierten Koordinaten des Ergebnisses einer inversen Montgomery-Transformation unterzieht. Näheres hierzu siehe z. B. ECC Guide [1], Kap. 2.2.4.

Die meisten Koprozessoren mit Montgomery-Multiplikation für Chipkarten wurden für RSA (zur RSA Kryptographie vgl. z.B. US 4,405,829) entwickelt und unterstützen deswegen nur die Montgomery-Multiplikation. Bei ECC-Operationen über Körpern mit Primzahlcharakteristik, z.B. eben elliptischen Kurven mit Primzahlcharakteristik, werden aber zusätzlich modulare Additionen und modulare Subtraktionen benötigt, die der Koprozessor nicht beherrscht, und die deshalb durch den Hauptprozessor CPU ausgeführt werden müssen.

Da die CPU modulare Operationen viel langsamer abarbeitet als ein speziell dafür geeigneter Koprozessor, kann es zu der paradoxen Situation kommen, dass eine modulare Addition oder Subtraktion mehr Zeit benötigt als eine modulare Multiplikation. Dieser Effekt wird noch dadurch verstärkt, dass die Bitlängen bei ECC üblicherweise viel kürzer sind als bei RSA.

Der Erfindung liegt die Aufgabe zu Grunde, ein Verfahren zum effizienten und vorzugsweise beschleunigten und vorzugsweise sicheren Durchführen einer kryptographischen Berechnung in einem Prozessor mit einem Hauptprozessor und einem dem Hauptprozessor zugeordneten Montgomery-Koprozessor zu schaffen. Zielsetzung der vorliegenden Erfindung ist weiter und insbesondere die Beschleunigung und Vereinfachung der Implementierung von ECC-Operationen in einem solchen Prozessor mit einem Hauptprozessor und einem Montgomery-Koprozessor (Koprozessor, der zur Ausführung der Montgomery-Multiplikation eingerichtet ist).

Die Aufgabe wird gelöst durch ein Verfahren nach Anspruch 1. Vorteilhafte Ausgestaltungen der Erfindung sind in den abhängigen Ansprüchen angegeben.

Anspruch 1 lehrt ein Verfahren zum beschleunigten Durchführen einer kryptographischen Berechnung, die aus Eingabedaten Ausgabedaten erzeugt, in einem Prozessor mit einem Hauptprozessor (CPU) und einem dem Hauptprozessor (CPU) zugeordneten Montgomery-Koprozessor, wobei die Berechnung definiert ist durch eine vorbestimmte Folge von Operationen. Die Folge von Operationen umfasst:

- zumindest eine modulare Addition und/oder modulare Subtraktion, und
- zumindest eine nach der modularen Addition und/oder modularen Subtraktion durchzuführende Montgomery-Multiplikation mit einem vorbestimmten Modulus M.

Das Verfahren zeichnet sich dadurch aus, dass die Berechnung beschleunigt durchgeführt wird, indem beim Durchführen der Berechnung zumindest eine modulare Addition durch eine einfache Addition ersetzt wird und/oder zumindest eine modulare Subtraktion durch eine einfache Subtraktion ersetzt wird. Es wird also bei dem Verfahren zumindest eine einfache Addition und/oder zumindest eine einfache Subtraktion durchgeführt und anschließend eine Montgomery-Multiplikation durchgeführt.

Dadurch, dass die modularen Operationen Addition und/oder Subtraktion durch die einfachen Operationen Addition und/oder Subtraktion ersetzt werden, entfällt der bei modularen Operationen erforderliche Schritt der modularen Reduktion. Hierdurch kommt das Verfahren mit weniger Programmcode aus als ein Verfahren, das diese Reduktion durchführen muss. Zudem ist das Verfahren schneller als ein Verfahren, bei dem modulare Operationen Addition und Subtraktion durchgeführt werden.

Daher ist nach Anspruch 1 ein Verfahren zum effizienten und beschleunigten Durchführen einer kryptographischen Berechnung geschaffen.

Eventuelle Überläufe bei den einfachen Additionen und Subtraktionen werden durch die zumindest eine anschließende Montgomery-Multiplikation, die ohnehin durchgeführt werden muss, automatisch kompensiert.

Wahlweise sind die Operationen der Folge Mitglieder einer Menge G von mehreren Operationen, insbesondere einer endlichen Menge von Operationen (vgl. weiter unten).

Falls im Allgemeinen eine Operation modulare Addition oder Subtraktion durch eine Operation einfache Addition oder Subtraktion ersetzt wird, müssen Überläufe oder Unterläufe der Ausgangsdaten der jeweiligen Operation, die auf Grund des Wegfalls der modularen Reduktion auftreten können, durch zusätzlich eingefügte Operationen abgearbeitet werden. Als zusätzliche Operation zur Abarbeitung eines Überlaufs oder Unterlaufs wird beispielsweise der Modulus M (oder ein geeignetes Vielfaches davon) subtrahiert bzw. addiert. Diese bedingte Addition oder Subtraktion (zusätzliche Operation) kostet zusätzlichen Rechenaufwand. Zudem ist die zusätzliche Operation bei einer naiven Implementierung im Stromverbrauch sichtbar und bietet eine Einstiegsmöglichkeit für Seitenkanalangriffe wie z.B. SPA oder DPA. Gegenmaßnahmen gegen derartige Angriffe werden in der Regel dadurch realisiert, dass, wenn kein Unter- oder Überlauf aufgetreten ist, anstatt des Modulus M oder eines Vielfachen des Modulus M der Wert 0 addiert oder subtrahiert wird. Dies kostet weiteren zusätzlichen Rechenaufwand. Auch sind in diesem Fall Dummy-Additionen oder Subtraktionen, auch mit von Null unterschiedlichen Werten, als Gegenmaßnahme denkbar. Auf jeden Fall kostet die Implementierung von solchen Gegenmaßnahmen gegen Seitenkanalangriffe zusätzliche Rechenzeit.

Ein Vorteil der Erfindung ist hingegen, dass bei dem erfindungsgemäß durchgeführten Ersetzen einer modularen Addition oder Subtraktion durch eine einfache Addition oder Subtraktion keine zusätzliche Operation wie z.B. bedingte Addition oder Subtraktion des Modulus (oder eines Vielfachen davon) erforderlich ist, da ja Überläufe bzw. Unterläufe durch die ohnehin nachfolgend durchgeführte Multiplikation automatisch abgearbeitet werden.

Somit entfällt auch der Zusatzaufwand für die im Allgemeinen erforderlichen Gegenmaßnahmen gegen Seitenkanalangriffe, und das Verfahren ist auch ohne Zusatzmaßnahmen gut gegen Seitenkanalangriffe geschützt. Das erfindungsgemäße Verfahren ist somit besonders sicher, insbesondere sicher gegenüber Seitenkanalangriffen.

Typischerweise ist die Folge von Operationen gebildet durch eine vorbestimmte Abfolge von nacheinander auszuführenden modularen Additionen, modularen Subtraktionen und Montgomery-Multiplikationen. Typischerweise werden alle in der Folge vorkommenden modularen Additionen durch einfache Additionen ersetzt und alle in der Folge vorkommenden modularen Subtraktionen durch einfache Subtraktionen ersetzt.

Prinzipiell kann die Folge von Operationen zusätzlich ein oder mehrere Inversionen umfassen. Vorzugsweise umfasst die Folge keine Inversionen, da diese aufwändig zu berechnen sind, ggf. so aufwändig, dass die Ersparnis an Rechenzeit durch das Weglassen der modularen Reduktion dagegen vernachlässigbar ist. Die Inversionen können wahlweise wie an anderer Stelle in dieser Anmeldung angegeben oder anderweitig auf an sich bekannte Weise vermieden werden.

Wahlweise werden die Addition und die Subtraktion durch den Hauptprozessor CPU durchgeführt, und wird die Montgomery-Multiplikation durch den Koprozessor durchgeführt. Für ein Verfahren gemäß dieser Ausführungsform ist die Erfindung besonders vorteilhaft. Der Hauptprozessor ist bei der Durchführung kryptographischer Berechnungen in der Regel langsamer als der speziell für kryptographische Berechnungen konfigurierte Koprozessor. Der Ersatz modularer Addition bzw. Subtraktion durch einfache Addition bzw. Subtraktion liefert somit bei in dem Hauptprozessor CPU durchgeführten Operationen einen besonders großen Gewinn an Rechenzeit und Ressourcen wie z.B. CPU-Register.

Wahlweise ist der Montgomery-Koprozessor so gestaltet, dass er Montgomery-Multiplikationen durchführen kann, und modulare Additionen und modulare Subtraktionen nicht durchführen kann. Insbesondere ist der Koprozessor wahlweise als RSA Montgomery-Koprozessor gestaltet. Ein RSA Montgomery-Koprozessor kann in der Regel Montgomery-Multiplikationen durchführen, aber keine modularen Additionen und modularen Subtraktionen und auch keine einfachen Additionen und Subtraktionen durchführen, da diese im RSA Verfahren nicht benötigt werden, wohl aber z.B. bei Operationen auf elliptischen Kurven (ECC-Operationen, vgl. weiter unten).

Falls der Koprozessor einfache Additionen oder Subtraktionen hardwaremäßig unterstützt, ist es natürlich vorteilhaft, diese auch mit dem Koprozessor durchzuführen statt mit dem Hauptprozessor. Dies ist aber bei vielen Koprozessoren nicht der Fall.

Damit eine modulare Addition oder modulare Subtraktion erfindungsgemäß durch eine einfache Addition bzw. einfache Subtraktion ersetzt werden kann, ist es vorteilhaft, wenn die genaue Arbeitsweise des Montgomery-Koprozessors bekannt ist. Insbesondere sollte der Koprozessor vorzugsweise Montgomery-Multiplikationen für längere Bitlängen zulassen, als durch den Modulus vorgegeben, um Überläufe und Unterläufe auffangen zu können.

Wahlweise wird die Berechnung so durchgeführt, dass der Koprozessor zur Durchführung der Montgomery-Multiplikation längere Bitlängen zulässt als gemäß dem bei der Montgomery-Multiplikation verwendeten Modulus M erforderlich ist. Dies kann wahlweise dadurch erzielt werden, dass der Modulus klein genug, d.h. mit ausreichend kurzer Bitlänge, gewählt wird. Alternativ kann dies dadurch erzielt werden, dass der Koprozessor zur Durchführung der Berechnung oder zumindest der Montgomery-Multiplikation in einer Betriebsart betrieben wird, die längere Bitlängen zulässt als gemäß dem bei der Montgomery-Multiplikation verwendeten Modulus M erforderlich ist. Hierdurch lässt der Koprozessor Eingangdaten zu, die eine größere Bitlänge haben als der Modulus. Wahlweise kann der Koprozessor zwei oder mehr unterschiedliche Betriebsarten haben, die unterschiedliche Bitlängen zulassen, und von denen wahlweise eine geeignete Betriebsart für die Berechnung bzw. die Montgomery-Multiplikation ausgewählt wird.

Das Zulassen der längeren Bitlängen ermöglicht ein Auffangen, d.h. vorübergehendes Abspeichern, von bei der einfachen Addition bzw. Subtraktion ggf. auftretenden Überläufen und Unterläufen, bevor diese Überläufe bzw. Unterläufe durch eine nach der Addition bzw. Subtraktion durchgeführte Montgomery-Multiplikation abgearbeitet werden.

Ein bei der einfachen Addition oder/und Subtraktion auftretender Überlauf oder Unterlauf wird wie gesagt automatisch durch die nach der einfachen Addition oder/und Subtraktion durchgeführte Montgomery-Multiplikation abgearbeitet. Falls bei der einfachen Addition bzw. Subtraktion kein Überlauf und kein Unterlauf auftritt, besteht ohnehin kein Unterschied zur modularen Addition bzw. Subtraktion.

Wahlweise werden weiter folgende Schritte durchgeführt:

- für die Berechnung werden die Eingangsdaten bereitgestellt;
- vor der Folge von Operationen, oder zumindest vor einer Teilfolge der Folge, wird eine Montgomery-Transformation an den bereitgestellten Eingangsdaten durchgeführt;
- die Operationen der Folge, oder zumindest der Teilfolge, werden mit den derart Montgomery-transformierten Eingangsdaten durchgeführt;
- aus der Berechnung werden die Ausgangsdaten ausgegeben; und
- nach der Folge, oder zumindest nach der Teilfolge, wird eine der Montgomery-Transformation entsprechende Montgomery-Rücktransformation an den Ausgangsdaten durchgeführt.

Mit anderen Worten wird bei dieser Ausführungsform die Montgomery-Transformation und -Rücktransformation nur ein einziges Mal vor bzw. nach der kryptographischen Berechnung durchgeführt, und die gesamte Berechnung mit Montgomery-transformierten Eingangsdaten durchgeführt. Als Eingangsdaten werden dabei auch jeweils Zwischenergebnisse angesehen, die aus einer Operation ausgegeben werden und in eine andere Operation eingegeben werden.

Wahlweise sind als Operationen mathematische Funktionen aus einer endlichen Menge von fest vorgegeben Funktionen $G = \{g_1, \ldots, g_v\}$ vorgesehen. Dabei sind die Eingangs- und Ausgangswerte der fest vorgegeben Funktionen $g_j$ in G ganze Zahlen modulo einer natürlichen Zahl M, wobei M der Modulus der Montgomery-Multiplikation ist.

D.h. Eingangsdaten der Funktionen $g_j$ in G nehmen nur die Eingangswerte ganze Zahlen modulo einer natürlichen Zahl M an, und Ausgangsdaten der Funktionen $g_j$ in G nehmen ebenfalls nur diese Werte an.

Jede der fest vorgegebenen Funktionen $g_j$ in G ist dabei vorzugsweise durch eine fest vorgegebene Folge von Additionen, Subtraktionen und Montgomery-Multiplikationen modulo M definiert.

Wahlweise ist durch die vorbestimmte Folge von Operationen zumindest eine Punktoperation auf einer elliptischen Kurve, insbesondere einer elliptischen Kurve in Primzahlcharakteristik, gebildet, wobei als Eingangsdaten und als Ausgangsdaten Punkte auf der elliptischen Kurve vorgesehen sind. Die Punkte auf der elliptischen Kurve, die Eingangsdaten sind, werden hier zur einfacheren Identifizierbarkeit auch als Eingangspunkte bezeichnet. Analog werden die Punkte auf der elliptischen Kurve, die Ausgangsdaten sind, auch als Ausgangspunkte bezeichnet. Die Punktoperation ist also durch eine vorbestimmte Abfolge von zumindest Addition, Subtraktionen und Montgomery-Multiplikationen gebildet.

Wahlweise sind insbesondere die Funktionen in der fest vorgegebenen Menge G Punktoperationen auf elliptischen Kurven von Primzahlcharakteristik. Wahlweise sind die Koordinaten der Eingangspunkte und Ausgangspunkte Montgomery transformiert.

Bei Punktoperationen auf elliptischen Kurven werden (modulare) Additionen und Subtraktionen benötigt, die aber viele Montgomery-Koprozessoren, insbesondere RSA Montgomery-Koprozessoren, nicht ausführen können, und die daher der Hauptprozessor ausführen muss. Die Erfindung ist daher besonders vorteilhaft einsetzbar bei Punktoperationen auf elliptischen Kurven, die in einem Prozessor mit einem Montgomery-Koprozessor, insbesondere mit einem RSA Montgomery-Koprozessoren, durchgeführt werden.

Wahlweise ist als Punktoperation zumindest eine der folgenden vorgesehen: Punktaddition, Punktsubtraktion, Punktverdopplung, Punktmultiplikation. Die Punktmultiplikation ist insbesondere wahlweise eine Punktmultiplikation mit kleinen ganzzahligen Vielfachen.

Wahlweise ist durch die Folge von Operationen eine vorbestimmte Folge von Punktoperationen, insbesondere Punktadditionen und Punktverdopplungen (und optional zudem Punktsubtratkionen), gebildet, wobei durch die Folge von Punktoperationen eine Punktmultiplikation oder die Berechnung einer Summe oder Differenz von Produkten von Punkten (Punktmultiplikationen) gebildet ist. Mit anderen Worten ist durch eine jeweils unterschiedlich vorbestimmte Abfolge von Additionen, Subtraktionen und Montgomery-Multiplikationen jeweils eine Punktaddition bzw. Punktverdopplung gebildet. Durch eine vorbestimmte Abfolge von Punktoperationen, insbesondere Punktadditionen und Punktverdopplungen, ist die Punktmultiplikation gebildet oder alternativ die Berechnung einer Summe oder Differenz von Produkten von Punkten (Punktmultiplikationen) gebildet.

Die Eingangspunkte werden bzw. sind wahlweise in affinen, projektiven, Jacobi-projektiven, oder Chudnovsky Koordinaten dargestellt. (Dabei sind projektive, Jacobi-projektive und Chudnovsky Koordinaten unterschiedliche Varianten von projektiven Koordinaten, siehe z.B. [1], Kap. 3.2.2.) Ebenso werden bzw. sind die Ausgangspunkte in projektiven, Jacobi-projektiven, oder Chudnovsky-Koordinaten dargestellt. Optional werden bzw. sind verschiedene Eingangspunkte wahlweise in gleichen oder unterschiedlichen Koordinaten dargestellt, also z.B. manche Eingangspunkte in affinen Koordinaten, manche in projektiven, Jacobi-projektiven, oder Chudnovsky Koordinaten. Prinzipiell wären affine Eingangskoordinaten die natürlichste Darstellungsweise, allerdings müssten dann Inversionen durchgeführt werden. Somit wird vorzugsweise ein Kompromiss zu bilden sein durch geeignete Auswahl der Koordinatendarstellung.

Wahlweise wird weiter, für zwei für den Koprozessor spezifische reelle Zahlen $\lambda_{min}$, $\lambda_{max}$, jede Montgomery-Multiplikation $C = A\cdot B\cdot R^{-1} \pmod{M}$ derart ausgeführt, dass das Ergebnis C die Bedingung $\lambda_{min} R + A\cdot B \leq C \leq \lambda_{max} \cdot R + A\cdot B$ erfüllt. Auf den meisten Koprozessoren werden Montgomery-Multiplikationen auf diese Weise ausgeführt.

Um die Fortpflanzung von Überträgen bei den einfachen Additionen und Subtraktionen in Grenzen zu halten, werden vorzugsweise zwei (weitere) reelle Zahlen $k_1$, $k_2$ mit $k_2 \geq k_1 + 1$ und zwei (noch weitere) reelle Zahlen $k_3$, $k_4$ t mit $k_3 \leq k_1$ und $k_4 \geq k_2$ bestimmt, so dass die folgende Bedingung erfüllt ist.

Wenn die Eingangsdaten $x_i$ einer Operation in G die Bedingung $k_1 M \leq x_i \leq k_2 M$ erfüllen:

- dann erfüllen die Ausgangsdaten $y_i$ dieser Operation ebenfalls die Bedingung $k_1 M \leq y_i \leq k_2 M$ und

- dann erfüllen alle Zwischenergebnisse $z_i$ dieser Operation, die als Eingangsdaten für eine Montgomery-Multiplikation verwendet werden, zusätzlich die Bedingung $k_3 M \leq z_i \leq k_4 M$.

Im Allgemeinen hängen die Werte $k_1$, $k_2$, $k_3$, $k_4$ von den Operationen in G sowie von den durch den Koprozessor vorgegebenen Werten $\lambda_{min}$, $\lambda_{max}$ ab.

Im Interesse größtmöglicher Flexibilität fordern wir, dass die Operationen in G in beliebiger Weise hintereinander ausgeführt werden können.

Wahlweise wird daher als Folge von Operationen eine Sequenz von mathematischen Funktionen $f_i$, i=1 ... n, $f_i$ in G berechnet, wobei für jede Funktion $f_i$, i=1 ... n die Ausgangsdaten von einer oder mehreren Funktionen $f_{i1}$, ... , f iv, mit i1, ... , iv < i als Eingangsdaten verwendet werden, dabei entweder an Stelle der oder zusätzlich zu den anfänglich gewählten Eingangsdaten.

Zu einer gegebenen Menge von Eingangsdaten Pj , j=1, ... ,m, kann also eine Sequenz von Funktionen $f_i$, i=1 ... n, $f_i$ in G, berechnet werden, wobei für jede Funktion $f_i$, i=1 ... n neben den Eingangsdaten $P_j$ auch die Ausgangsdaten einer oder mehrerer Funktionen $f_{i1}$, ... , f iv, mit i1, ... , iv < i als Eingangsdaten verwendet werden können. Mit anderen Worten berechnet jede Funktion $f_i$, i=1 ... n ihr Ergebnis unter Verwendung der Eingangsdaten $P_j$ oder der Ausgangsdaten von einer oder mehreren zuvor berechneten Funktionen $f_i$, oder einer Kombination von beiden Arten von Daten.

Wahlweise wird bzw. werden als Eingangsdaten für die Berechnung der Sequenz $f_i$ ein Punkt oder mehrere Punkte auf einer elliptischen Kurve verwendet.

Wahlweise kann die Sequenz von Funktionen $f_i$, i=1 ... n eine Punktmultiplikation auf einer elliptischen Kurve sein oder die Berechnung einer Summe oder Differenz von mehreren Vielfachen eines Punktes auf einer elliptischen Kurve. Wahlweise stellen die Eingangsdaten für die Berechnung der Sequenz $f_i$ einen Punkt oder mehrere Punkte auf einer elliptischen Kurve dar. Das Endergebnis dieser Berechnung ist dann das Produkt eines Eingangspunktes P mit einer ganzen Zahl k ist, oder eine Summe oder Differenz von mehreren Produkten von Eingangspunkten $P_i$ mit ganzen Zahlen $k_i$.

Erfindungsgemäß werden bei den Operationen in G modulare Additionen und Subtraktionen durch einfache Additionen und Subtraktionen ersetzt. Wahlweise umfasst die Berechnung einer Operation in G weiter, zusätzlich zu der Folge von (modularen) Operationen, ein oder mehrere Additionen oder Subtraktionen eines festen Vielfachen des Moduls M, die an vorbestimmten Stellen der Berechnung durchgeführt werden, insbesondere wahlweise vor, nach oder zwischen mehreren Operationen der Folge.

Wenn erfindungsgemäß modulare Additionen und Subtraktionen durch einfache Operationen Additionen und Subtraktionen ersetzt werden, benötigt die CPU in der Regel auch weniger Ressourcen (wie z.B. CPU-Register) zur Durchführung dieser einfacheren Operationen. Die freiwerdenden Register können für Standard-Optimierungstechniken wie Loop-Unrolling oder die Ausführung von mehreren Operationen innerhalb einer Programmschleife genutzt werden. Hierdurch kann die langsamere Ausführungsgeschwindigkeit der CPU (im Vergleich zum Koprozessor) bis zu einem gewissen Grad kompensiert werden.

Im Folgenden wird die Erfindung unter Bezugnahme auf die Zeichnung und an Hand von Ausführungsbeispielen näher erläutert. In der Zeichnung zeigen:

Fig.1    eine Chipkarte mit einem Prozessor, der einen Hauptprozessor und einen RSA Montgomery Krypto-Koprozessor umfasst;

Fig. 2    eine Gegenüberstellung des schematischen Ablaufs einer Addition mit anschließender Montgomery Multiplikation im Stand der Technik und gemäß der Erfindung.

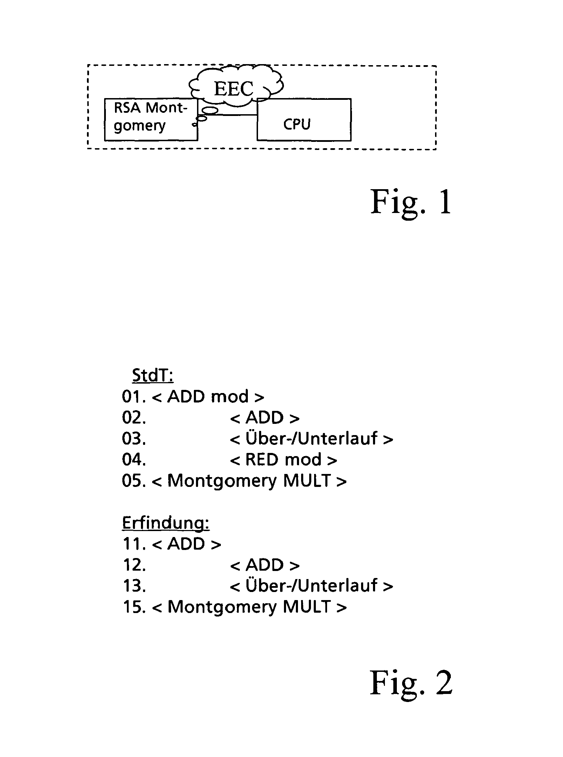

Fig.1 zeigt eine Chipkarte (Bereich innerhalb der gestrichelten Umrandung) mit einem Prozessor, der einen Hauptprozessor "CPU" und einen RSA Montgomery Krypto-Koprozessor "RSA Montgomery" umfasst. Kryptographische Berechnungen werden nach Möglichkeit durch den speziell hierfür ausgelegten Koprozessor ausgeführt. Falls die Chipkarte kryptographische Berechnungen auf elliptischen Kurven, auch genannt ECC-Berechnungen, ausführt, werden die dabei anfallenden modularen Additionen und modularen Subtraktionen durch die CPU ausgeführt, da der RSA Koprozessor keine Additionen und Subtraktionen ausführen kann.

Fig. 2 zeigt eine Gegenüberstellung des schematischen Ablaufs einer Addition mit anschließender Montgomery Multiplikation im Stand der Technik und gemäß der Erfindung. Dabei ist in Erinnerung zu behalten, dass ECC-Berechnungen im Anschluss an eine Addition stets an irgend einer Stelle im Ablauf der Berechnung eine Montgomery-Multiplikation umfassen.

Gemäß dem Stand der Technik aus Fig. 2 wird eine modulare Addition 01 wie folgt durchgeführt. Gemäß Schritt 02 wird eine einfache Addition ausgeführt. Gemäß Schritt 03 wird der Überlauf oder Unterlauf für die spätere Abarbeitung notiert (er kann auch Null sein). Gemäß Schritt 04 wird eine modulare Reduktion durchgeführt und hierdurch der Überlauf oder Unterlauf abgearbeitet. In einem Schritt 05 wird eine Montgomery Multiplikation durchgeführt.

Gemäß der Erfindung aus Fig. 2 wird eine einfache Addition 11 durchgeführt. Dabei wird in Schritt 12 die einfache Addition ausgeführt. In Schritt 13 wird der Überlauf oder Unterlauf für die spätere Abarbeitung notiert (er kann auch Null sein). Die im Stand der Technik erforderliche modulare Reduktion entfällt. In einem Schritt 15 wird eine Montgomery Multiplikation durchgeführt, durch welche der Überlauf oder Unterlauf abgearbeitet wird.

Mathematisch wird die Montgomery-Multiplikation bei den meisten Koprozessoren, und auch beim im Zusammenhang mit der Erfindung bevorzugten Montgomery Koprozessor, wie folgt durchgeführt:

[Algorithmus MM]

Input A, B, Modulus M sowie der o.g. Konfigurationsparameter R (Hierbei ist M der ungerade Modulus und R eine Zweierpotenz)

1.) Berechne den Wert $M_{inv} = M^{-1} \bmod R$ mit $0 \leq M_{inv} < R$

2.) Berechne den Wert $Q = -A \cdot B \cdot M_{inv} \cdot (\bmod R)$

3.) Berechne den Wert $C = (A.B + M \cdot Q) / R$

Output: C

Hierbei ist die Division durch R in Schritt 3 ohne Rest durchführbar. Der interne Ablauf der Montgomery-Multiplikation spielt dabei keine Rolle, solange das angegebene Ergebnis herauskommt.

Im Folgenden werden zwei Ausführungsbeispiele der Erfindung ausführlich dargelegt. Die Ausführungsbeispiele umfassen jeweils die Durchführung einer kryptographischen Berechnung, sowie die Konfiguration des Montgomery Koprozessors, so dass Überläufe und Unterläufe von Rechenergebnissen, die im Verlauf der Berechnung auftreten können, aufgefangen werden können, um nachfolgend durch eine Montgomery Multiplikation automatisch abgearbeitet werden zu können. Als kryptographische Berechnung ist jeweils eine Punktmultiplikation auf einer elliptischen Kurve vorgesehen.

_Erstes Ausführungsbeispiel der Erfindung_

In einem ersten Ausführungsbeispiel der Erfindung nehmen wir an, dass der in Schritt 2.) von Algorithmus MM berechnete Wert Q zusätzlich die Bedingung $\lambda_{min} R \le Q \le \lambda_{max} R$ erfüllt und setzen $\lambda = \max(|\lambda min|, |\lambda_{max}|)$. Da der für Q zulässige Wertebereich mindestens R verschieden Zahlen (modulo R) umfassen muss, gilt immer $\lambda_{max} \ge \lambda_{min} + 1$ und somit $\lambda \ge ½$.. Für die meisten Koprozessoren kann $\lambda \le 1$ angenommen werden. Hierbei lassen wir grundsätzlich negative Zahlen als Eingangswerte zu. In Schritt 3 gilt dann also:

$$\lambda_{min} \cdot M \cdot + A \cdot B \le C = (A \cdot B + M \cdot Q) / R \le \lambda_{max} \cdot M \cdot + A \cdot B \quad . \, (2)$$

Ferner wird der Koprozessor so konfiguriert, dass der Modulus M die Bedingung $M < \mu R$ für einen hinreichend kleinen Wert $\mu$, mit $0 < \mu < 1$ erfüllt.

Unser Ziel ist es, den Wert für $\mu$ so zu wählen, dass die Ergebnisse C aller während der Berechnung in G vorkommenden Montgomery-Multiplikationen dem Betrag nach höchstens den Wert $C_{max} = 2\lambda M$ haben. (Die Obergrenze $2\lambda M$ ist hier nur beispielhaft zu verstehen. Sie dient lediglich der Vereinfachung der Rechnung und stellt keine Einschränkung der Erfindung dar. Für jede andere Obergrenze $C_{max}$ mit $C_{max} > \lambda M$ kann eine ähnliche Rechnung durchgeführt werden.) Diese Schranke für C soll auch dann noch gelten, wenn wir alle modularen Additionen und Subtraktionen durch einfache Additionen und Subtraktionen ersetzen.

Da die zu berechnenden ECC-Funktionen nur modulare Additionen, modulare Subtraktionen und Montgomery-Multiplikationen enthalten, kann angenommen werden, dass der Eingabewert A einer Montgomery-Multiplikation sich durch Summen und Differenzen von Ergebnissen anderer Montgomery-Multiplikationen darstellen lässt. Falls eine solche Summe mit dem Ergebnis A z.B. $\alpha$ verschiedene Terme hat, und jeder Term nach unserer Annahme höchstens den Absolutbetrag $2\lambda$ hat, gilt $|A| \le 2\lambda \alpha M$. Falls die Summe mit dem Ergebnis A ein kleines ganzzahliges Vielfaches des Ergebnisses Co einer vorangegangenen Montgomery-Multiplikation als Term enthält, so ist dieses Vielfache durch wiederholte Addition oder Subtraktion zu bilden, und der Wert $\alpha$, der die Anzahl der Terme beschreibt, ist entsprechend anzupassen. Beispielsweise ist der Term $-3 Co$ durch $-C_0 - C_0 - Co$ zu ersetzen. (Diese Ersetzung dient nur der Bestimmung von $\alpha$, sie bedeutet keine Einschränkung für die Implementierung der Berechnung von A). Analog stellen wir B durch Summen und Differenzen von Ausgabewerten von vorangegangen Montgomery-Multiplikationen dar. Wenn wir annehmen, dass diese Summe $\beta$ Terme enthält, gilt analog: $|B| \le 2\lambda \beta M$.

Aus $|A| \le 2\lambda \alpha M$, $|B| \le 2\lambda \beta M$, $M < \mu R$, $\max(|\lambda_{min}|, |\lambda_{max}|) \le \lambda$ und (2) folgt:

$$|C| \le |A| \, |B| / R + \lambda M \le (4\alpha \beta \lambda^2 \mu + \lambda) M \qquad . \qquad (3)$$

Unser Ziel $|C| \le 2\lambda M$ ist also dann erreicht, wenn wir $\mu$ so wählen, dass gilt:

$$\mu \le 1 / (4 \alpha \beta \lambda) \, .$$

Für die Berechnung einer Punktmultiplikation auf einer elliptischen Kurve werden mehrere Punktoperationen $g_i$ aus einer festen Menge $G = \{g_1, ..., g_v\}$ von Punktoperationen hintereinander durchgeführt. Typischerweise umfasst die Menge G die Punktaddition und die Punktverdoppelung, evtl. auch die Punktsubtraktion. Hierbei können die Eingangspunkte z.B. in affinen, projektiven, Jacobi-projektiven, oder Chudnovsky Koordinaten dargestellt werden, wobei verschiedene Eingangspunkte auch in unterschiedlichen Koordinaten dargestellt werden können, s. ECC Guide [1]. Die Ergebnispunkte (Ausgangspunkte) können z.B. in projektiven, Jacobi-projektiven, oder Chudnovsky Koordinaten dargestellt werden.

Dabei werden die Operationen $g_i$ in G (z. B. Punktadditionen und Punktverdoppelungen) als eine Folge F = {$f_i$, i=1 ... n} von Operationen Additionen, Subtraktionen und Montgomery-Multiplikationen durchgeführt. Hierbei können bei der Berechnung einer Operation $f_i$, mit beliebigem i, Eingangswerte $A_i$ und $B_i$ einer jeden Montgomery-Multiplikation als Summen und Differenzen von $a_i$ bzw. $\beta_i$ Termen $f_{i1}$, ...,$f_{iv}$ dargestellt werden, wobei jeder Term $f_{i1}$, ... , $f_{iv}$ das Ergebnis einer vorangegangenen Montgomery-Multiplikation ist, d.h. es gilt i > i1, ... , iv.

Um den bei der Erfindung vorliegenden Koprozessor für die Montgomery-Multiplikation besonders vorteilhaft nutzen zu können, werden die Koordinaten vorzugsweise während der gesamten Rechnung in Montgomerytransformierter Form belassen. Dazu wird, bevor die erste Punktoperation der Punktmultiplikation durchgeführt wird, eine Montgomery-Transformation der Eingangspunkte (Eingangs-Koordinaten) durchgeführt. Analog wird, nachdem die letzte Punktoperation der Punktmultiplikation durchgeführt worden ist, eine der Montgomery-Transformation entsprechende Rücktransformation der Ausgangspunkte (Ausgangs-Koordinaten) durchgeführt. Eingangspunkte bzw. Ausgangspunkte, die während einer Punktoperation verwendet werden, sind dann stets Montgomerytransformierte Eingangspunkte bzw. Ausgangspunkte.

Das Endergebnis einer Punktaddition oder Punktverdoppelung ist ein Punkt P auf einer elliptischen Kurve der z. B. in projektiven oder Jacobi-projektiven Koordinaten (x,y,z) dargestellt wird. Diese Endergebnisse x, y, z sind sowohl bei der Punktverdoppelung als auch bei der Punktaddition im allgemeinen Fall Summen und Differenzen von Zwischenwerten, welche selbst die Ergebnisse von Montgomery Multiplikationen sind. Wir können annehmen dass alle Summen zur Berechnung der Endergebnisse x, y und z bei den ECC-Operationen maximal $\alpha_x$, $\alpha_y$, bzw. $\alpha_z$ derartige Zwischenprodukte als Terme enthalten. Da die Ergebnisse der ECC-Operationen wieder als Eingänge für weitere ECC-Operationen dienen, müssen die Eingänge $x_i$, $y_i$ und $z_i$ einer ECC-Operation, welche die Koordinaten eines Eingangspunktes $P_i$ darstellen, als Summen mit $\alpha_x$, $\alpha_y$, bzw. $\alpha_z$ Termen betrachtet werden. Die Werte $\alpha_i$ und $\beta_i$ für Montgomery-Multiplikationen, deren Eingänge A oder B diese Koordinaten $x_i$, $y_i$ oder $z_i$ als Terme enthalten, müssen entsprechend angepasst werden. Diese Anpassung ist unproblematisch, solange eine Eingangskoordinate nicht direkt linear in eine Ausgangskoordinate eingeht. Dies ist aber bei den bekannten ECC-Operationen nicht der Fall.

Nach dieser Anpassung erhalten wir als zulässige Werte für $\mu$:

$$\mu \leq 1 / (4\,\lambda\ \max(\alpha_i \cdot \beta_i))\ . \tag{4}$$

Als Obergrenze für die Absolutbeträge der Zwischenergebnisse A und B erhalten wir:

$$|A|\,,\,|B|\ \leq 2\lambda\,\max(\alpha_i,\beta_i)\,M \tag{5}$$

Mit Hilfe der Formeln (4) und (5) lässt sich der Koprozessor für einen gegebenen Modulus M so konfigurieren, dass bei einer beliebigen Folge von ECC-Operation auch dann keine Überläufe auftreten, wenn man modulare Additionen und Subtraktionen durch einfache Additionen und Subtraktionen ersetzt.

Wir beschreiben die Berechnung der Werte $\max(\alpha_i \cdot \beta_i)$ und $\max(\alpha_i, \beta_i)$ jetzt näher für den Fall der Punktaddition und -verdopplung in projektiven Jacobi-Koordinaten. Bei der Punktaddition nehmen wir an, dass der erste Punkt $P_1 = (x_1, y_1, z_1)$ Jacobi-projektiv und der zweite Punkt $P_2 = (x_2, y_2)$ affin dargestellt wird. Das Ergebnis $P_3 = (x_3, y_3, z_3)$ der Verdoppelung oder der Addition wird Jacobi-projektiv dargestellt.

Die Formel für die Punktverdopplung $P_3 = 2\,P_1$ lautet:

$$u\ =\ 3\,x_1{}^2 + a\,z_1{}^4$$

$$x_3\ =\ u^2 - 8\,x_1\,y_1{}^2$$

$$y_3 = u\,(4\,x_1\,y_1{}^2 - x_3) - 8\,y_1{}^4$$

$$z_3 = 2\,y_1\,z_1$$

Die Formel für die Punktaddition $P_3 = P_1 + P_2$ lautet:

$$u = x_2\,z_1{}^2 + x_1$$

$$v = x_2\,z_1{}^2 - x_1$$

$$w = y_1 - y_2\,z_1{}^3$$

$$x_3 = w^2 - u\,v^2$$

$$y_3 = w\,(x_3 - v^2\,x_1) - v^3\,y_1$$

$$z_3 = v\,z_1$$

Näheres hierzu s. ECC Guide [1]. Aus diesen Formeln sehen wir, dass die Werte von $x_3$ und $y_3$ bei der Punktverdopplung beide als eine Summe von neun Termen berechnet werden. Hierbei ist der Term mit dem Faktor 8 jeweils achtfach zu werten. Der Wert $z_3$ wird dabei als das Doppelte eines Produktes, also als eine Summe von zwei Termen berechnet. Bei der Punkt-addition ist die Anzahl der Terme in den Ausdrücken für $x_3$, $y_3$, und $z_3$ jeweils geringer. Somit können wir $\alpha_x = \alpha_y = 9$ und $\alpha_z = 2$ setzen.

Bei der Berechnung des Produktes $x_1{}^2$, $x_1\,y_1$ oder $y_1{}^2$ ist gemäß der obigen Ausführung davon auszugehen, dass jeder der Faktoren dieses Produktes eine Summe von neun Termen ist, d.h. $\alpha_i = \beta_i = 9$. Eine genauere Betrachtung der in den o. g. Formeln berechneten Produkte ergibt, dass keines dieser Produkte einen Faktor enthält, der aus mehr als neun Termen besteht. Deswegen kann für das beschriebene Ausführungsbeispiel $\max(\alpha_i \cdot \beta_i) = 9.9 = 81$ und $\max(\alpha_i, \beta_i) = 9$ angenommen werden.

Gemäß (4) ist der maximal zulässige Werte für $\mu = M / R$ dann

$$\mu \leq 1 / (4 \cdot 81 \cdot \lambda) \,.$$

Gemäß (5) muss der Koprozessor in der Lage sein, eine Montgomery-Multiplikation $A \cdot B \cdot R^{-1}$ (mod M) mit beliebigen Zahlen $|A|$, $|B| \leq 2 \cdot 9 \cdot \lambda M = 18\lambda M$ durchzuführen. Wenn diese beiden Bedingungen erfüllt sind, können in den genannten Formeln für die Punktaddition und für die Punktverdoppelung die modularen Additionen und Subtraktionen durch einfache Additionen und Subtraktionen ersetzt werden.

Bei der Verwendung von anderen Formeln für die Punktoperationen ergeben sich andere Werte für $\max(a_i \cdot \beta_i)$ und $\max(\alpha_i, \beta_i)$ und damit auch andere Schranken für den maximal zulässigen Wert für $\mu = M / R$, sowie für die Größe der Zahlen | A | und | B |, die der Koprozessor multiplizieren können muss, aber die Idee bleibt die gleiche.

Zweites Ausführungsbeispiel der Erfindung

Wir machen von den nachfolgenden Unterschieden abgesehen die gleichen Annahmen wie beim ersten Ausführungsbeispiel. Im Unterschied dazu nehmen wir aber an, dass der Koprozessor für die Montgomery-Multiplikation keine negativen Eingabewerte A und B erlaubt, und dass das Ergebnis C der Montgomery-Multiplikation nicht negativ ist.
Summe und Montgomery-Produkt von nichtnegativen Zahlen sind ebenfalls nichtnegativ, so dass hierfür unverändert die Betrachtungen für das erste Ausführungsbeispiel gelten. Lediglich bei einer Subtraktion A - B von zwei nichtnegativen Zahlen müssen wir den Ausdruck A - B durch A + 1M - B ersetzen, wobei 1 eine geeignete natürliche Zahl ist.
Ein geeigneter Wert 1 kann wie folgt bestimmt werden: Seien $\lambda_{min}$, $A_{max}$ und $\lambda.= \max(|\lambda_{min}|, |\lambda_{max}|)$ wie in (2). Wenn wir $\lambda$ zur nächstgrößeren ganzen oder halben Zahl aufrunden ( d. h. wir setzen $\lambda.= \min\{x : x \geq \max(|\lambda_{min}|, |\lambda_{max}|)$ 2·x ganzzahlig}), dann bleiben die Gleichungen (3) und (4) richtig. Für alle Ergebnisse C einer Montgomery-Multiplikation gilt dann $0 \leq C \leq C_{max} = 2\lambda M$, wobei $2\lambda M$ ein ganzzahliges Vielfaches des Modulus M ist. Ein beliebiges Zwischenergebnis A einer Punktoperation ist die Differenz zwischen einer Summe von $\alpha_+$ Zwischenprodukten $C_i$ und einer Summe von $\alpha$-weiteren Zwischenprodukten $C_i$. Hierbei liegt jedes Zwischenprodukt im Bereich $0 \leq C_i \leq 2\lambda M$. Um zu vermeiden, dass das Zwischenergebnis A negativ wird, genügt es, den Wert A durch $A' = A + 2\lambda \alpha_- M$ zu ersetzen. Damit ist sichergestellt, dass $A' = A$ (mod M) und $0 \leq A' \leq 2\lambda(\alpha_+ + \alpha_-)M$ gilt, so dass die Eingabe A bei der folgenden Montgomery-Multiplikation durch A' ersetzt werden kann.
Optional können auch größere Vielfache 1M von M (z. B. für Zweierpotenzen 1) addiert werden. In diesem Fall müssen die Werte $\alpha_i$, und $\beta_i$ für die folgende Montgomery-Multiplikation entsprechend angepasst werden.

Literatur:

[1] D. Hankerson, A. Menezes, S. Vanstone. Guide to Elliptic Curve cryptography. Springer Verlag, 2004

[2] P. Montgomery. Modular multiplication without trial division. Mathematics of Computation, 48, 519-521, 1985

[3] A .J. Menezes, P.C. van Oorschot, S.C. Vanstone, Handbook of Applied Cryptography, Kapitel 14.3.2, S. 600-601,1997

**Patentansprüche**

1. Verfahren zum beschleunigten Durchführen einer kryptographischen Berechnung, die aus Eingabedaten Ausgabedaten erzeugt, in einem Prozessor mit einem Hauptprozessor (CPU) und einem dem Hauptprozessor (CPU) zugeordneten Montgomery-Koprozessor, wobei die Berechnung definiert ist durch eine vorbestimmte Folge von Operationen, die Folge umfassend

   - zumindest eine modulare Addition und/oder modulare Subtraktion, und
   - zumindest eine nach der modularen Addition und/oder modularen Subtraktion durchzuführende Montgomery-Multiplikation mit einem vorbestimmten Modulus M,
   **dadurch gekennzeichnet, dass**
   die Berechnung beschleunigt durchgeführt wird, indem beim Durchführen der Berechnung zumindest eine modulare Addition durch eine einfache Addition ersetzt wird und/oder zumindest eine modulare Subtraktion durch eine einfache Subtraktion ersetzt wird.

2. Verfahren nach Anspruch 1, wobei die Addition und die Subtraktion durch den Hauptprozessor (CPU) durchgeführt werden und die Montgomery-Multiplikation durch den Koprozessor durchgeführt wird.

3. Verfahren nach Anspruch 1 oder 2, wobei der Montgomery-Koprozessor so gestaltet ist, dass er Montgomery-Multiplikationen durchführen kann, und modulare Additionen und modulare Subtraktionen nicht durchführen kann.

4. Verfahren nach einem der Ansprüche 1 bis 3, wobei die Berechnung derart durchgeführt wird, dass der Koprozessor zur Durchführung der Montgomery-Multiplikation längere Bitlängen zulässt als gemäß dem bei der Montgomery-Multiplikation verwendeten Modulus M erforderlich ist.

**5.** Verfahren nach einem der Ansprüche 1 bis 4, wobei ein bei der einfachen Addition oder/und Subtraktion auftretender Überlauf oder Unterlauf durch die nach der einfachen Addition oder/und Subtraktion durchgeführte Montgomery-Multiplikation abgearbeitet wird.

**6.** Verfahren nach einem der Ansprüche 1 bis 5, wobei weiter

- für die Berechnung die Eingangsdaten bereitgestellt werden;
- vor der Folge von Operationen, oder zumindest vor einer Teilfolge der Folge, eine Montgomery-Transformation an den bereitgestellten Eingangsdaten durchgeführt wird;
- die Operationen der Folge, oder zumindest der Teilfolge, mit den derart Montgomery-transformierten Eingangsdaten durchgeführt werden;
- aus der Berechnung die Ausgangsdaten ausgegeben werden; und
- nach der Folge, oder zumindest nach der Teilfolge, eine der Montgomery-Transformation entsprechende Montgomery-Rücktransformation an den Ausgangsdaten durchgeführt wird.

**7.** Verfahren nach einem der Ansprüche 1 bis 6, wobei als Operationen mathematische Funktionen aus einer endlichen Menge von fest vorgegeben Funktionen $G = \{g_1, \dots, g_v\}$ vorgesehen sind,

wobei die Eingangswerte und Ausgangswerte der fest vorgegeben Funktionen $g_j$ in G ganze Zahlen modulo einer natürlichen Zahl M sind, wobei M der Modulus der Montgomery-Multiplikation ist,

und wobei vorzugsweise jede der fest vorgegebenen Funktionen $g_j$ in G durch eine fest vorgegebene Folge von Additionen, Subtraktionen und Montgomery-Multiplikationen modulo M definiert ist.

**8.** Verfahren nach einem der Ansprüche 1 bis 7, wobei durch die vorbestimmte Folge von Operationen zumindest eine Punktoperation auf einer elliptischen Kurve, insbesondere einer elliptischen Kurve in Primzahlcharakteristik, gebildet ist, und wobei als Eingangsdaten Eingangspunkte und als Ausgangsdaten Ausgangspunkte auf der elliptischen Kurve vorgesehen sind.

**9.** Verfahren nach Anspruch 8, wobei als Punktoperation zumindest eine der folgenden vorgesehen ist: Punktaddition, Punktsubtraktion, Punktverdopplung, Punktmultiplikation.

**10.** Verfahren nach Anspruch 8 oder 9, wobei durch die Folge von Operationen eine vorbestimmte Folge von Punktoperationen, insbesondere Punktadditionen und Punktverdopplungen, gebildet ist, wobei durch die Folge von Punktoperationen, insbesondere Punktadditionen und Punktverdopplungen, eine Punktmultiplikation oder die Berechnung einer Summe oder Differenz von Produkten von Punkten gebildet ist.

**11.** Verfahren nach einem der Ansprüche 8 bis 10, wobei die Eingangspunkte in affinen, projektiven, Jacobi-projektiven, oder Chudnovsky Koordinaten dargestellt werden, und wobei die Ausgangspunkte in projektiven, Jacobi-projektiven oder Chudnovsky-Koordinaten dargestellt werden, und wobei optional verschiedene Eingangspunkte wahlweise in gleichen oder unterschiedlichen Koordinaten dargestellt werden.

**12.** Verfahren nach einem der Ansprüche 1 bis 11, wobei weiter, für zwei für den Koprozessor spezifische reelle Zahlen $\lambda_{min}$, $\lambda_{max}$ jede Montgomery-Multiplikation $C = A \cdot B \cdot R^{-1} \pmod{M}$ derart ausgeführt wird, dass das Ergebnis C die Bedingung $\lambda_{min} \cdot R + A \cdot B \leq C \leq \lambda_{max} \cdot R + A.B$ erfüllt.

**13.** Verfahren nach einem der Ansprüche 1 bis 12, wobei weiter zwei reelle Zahlen $k_1$, $k_2$ mit $k_2 \geq k_1 + 1$ ausgewählt werden und zwei reelle Zahlen $k_3$, $k_4$ ausgewählt werden mit $k_3 \leq k_1$ und $k_4 \geq k_2$, so dass für alle Operationen in einer Menge G von Operationen gilt, dass wenn die Eingangsdaten $x_i$ einer Operation die Bedingung $k_1 M \leq x_i \leq k_2 M$ erfüllen:

- die Ausgangsdaten $y_i$ dieser Operation ebenfalls die Bedingung $k_1 M \leq y_i \leq k_2 M$ erfüllen; und
- alle Ausgangsdaten oder Zwischenergebnisse $z_i$ von Operation in G, die als Eingangsdaten für eine Montgomery-Multiplikation verwendet werden, zusätzlich die Bedingung $k_3 M \leq z_i \leq k_4 M$ erfüllen.

**14.** Verfahren nach einem der Ansprüche 1 bis 13, wobei als Folge von Operationen eine Sequenz von mathematischen Funktionen $f_i$, i=1 ... n, $f_i$ in G berechnet wird, wobei für jede Funktion $f_i$, i=1 ... n die Eingangsdaten gemäß Anspruch 1 und/oder die Ausgangsdaten von einer oder mehreren Funktionen $f_{i1}, \dots, f_{iv}$, mit i1, ... , iv < i als Eingangsdaten verwendet werden.

**15.** Verfahren nach Anspruch 14, wobei als Eingangsdaten für die Berechnung der Sequenz $f_i$ ein Punkt oder mehrere Punkte auf einer elliptischen Kurve verwendet wird bzw. werden, wobei optional weiter die Eingangsdaten für die Berechnung der Sequenz $f_i$ einen Punkt oder mehrere Punkte auf einer elliptischen Kurve darstellen, und die Ausgangsdaten oder das Endergebnis dieser Berechnung das Produkt eines Eingangspunktes P mit einer ganzen Zahl k ist, oder eine Summe oder Differenz von mehreren Produkten von Eingangspunkten $P_i$ mit ganzen Zahlen $k_i$.

**16.** Verfahren nach einem der Ansprüche 1 bis 15, wobei die Berechnung weiter, zusätzlich zu der Folge von Operationen, ein oder mehrere Additionen oder Subtraktionen eines festen Vielfachen des Moduls M umfasst, die an vorbestimmten Stellen der Berechnung durchgeführt werden, insbesondere wahlweise vor, nach oder zwischen mehreren Operationen der Folge.

RSA Montgomery

EEC

CPU

# Fig. 1

StdT:
01. < ADD mod >
02.          < ADD >
03.          < Über-/Unterlauf >
04.          < RED mod >
05. < Montgomery MULT >

Erfindung:
11. < ADD >
12.          < ADD >
13.          < Über-/Unterlauf >
15. < Montgomery MULT >

# Fig. 2

# EP 2 521 024 A1

**Europäisches Patentamt**
**European Patent Office**
**Office européen des brevets**

## EUROPÄISCHER RECHERCHENBERICHT

Nummer der Anmeldung

EP 12 00 3024

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GUERON S: "ENHANCED MONTGOMERY MULTIPLICATION", CRYPTOGRAPHIC HARDWARE AND EMBEDDED SYSTEMS. INTERNATIONALWORKSHOP, XX, XX, 13. August 2002 (2002-08-13), Seiten 46-56, XP001160520, * Zusammenfassung * * Seite 46, Zeile 1 - letzte Zeile * * Lemma 1; Seite 49 * * Kapitel 4 und 5; Seite 52 - Seite 56 * ----- | 1-16 | INV. G06F7/72 |
| A,D | US 5 961 578 A (NAKADA KUNIHIKO [JP]) 5. Oktober 1999 (1999-10-05) * Zusammenfassung * * Spalte 3, Zeile 47 - Zeile 50 * * Spalte 4, Zeile 50 - Zeile 65 * * Abbildung 3 * ----- | 1-16 | |

| RECHERCHIERTE SACHGEBIETE (IPC) |
|---|
| G06F |

Der vorliegende Recherchenbericht wurde für alle Patentansprüche erstellt

| Recherchenort | Abschlußdatum der Recherche | Prüfer |
|---|---|---|
| Den Haag | 16. Juli 2012 | Post, Katharina |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

15

EP 2 521 024 A1

**ANHANG ZUM EUROPÄISCHEN RECHERCHENBERICHT
ÜBER DIE EUROPÄISCHE PATENTANMELDUNG NR.**

EP 12 00 3024

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-07-2012

| Im Recherchenbericht angeführtes Patentdokument | Datum der Veröffentlichung | Mitglied(er) der Patentfamilie | Datum der Veröffentlichung |
|---|---|---|---|
| US 5961578 A | 05-10-1999 | JP 3615622 B2<br>JP 10021057 A<br>TW 378294 B<br>US 5961578 A | 02-02-2005<br>23-01-1998<br>01-01-2000<br>05-10-1999 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10357661 B4
- US 5961578 A
- US 4405829 A

**In der Beschreibung aufgeführte Nicht-Patentliteratur**

- **P. MONTGOMERY.** *Modular multiplication without trial division, Mathematics of Computation,* 1985, vol. 48, 519-521
- **A .J. MENEZES ; P.C. VAN OORSCHOT ; S.C. VANSTONE.** Handbook of Applied Cryptography. 600-601
- **D. HANKERSON ; A. MENEZES ; S. VANSTONE.** Guide to Elliptic Curve cryptography. Springer Verlag, 2004
- **P. MONTGOMERY.** Modular multiplication without trial division. *Mathematics of Computation,* 1985, vol. 48, 519-521
- **A .J. MENEZES ; P.C. VAN OORSCHOT ; S.C. VANSTONE.** Handbook of Applied Cryptography. 1997, 600-601